# EUROPEAN PATENT APPLICATION

(11) **EP 1 220 143 A2**
(43) Date of publication of application: **03.07.2002**
(21) Application number: 01104502.8
(22) Date of filing: 01.03.2001
(51) Int. Cl.: G06K 11/08

(54) **Electronics device applying an image sensor**

(30) Priority: 25.12.2000 JP 2000391813
(71) Applicant: Hitachi, Ltd., Chiyoda-ku, Tokyo (JP)
(72) Inventor: Ikeda, Mitsuji, Hitachi, Ltd., Intell Prop. Group, Chiyoda-ku, Tokyo 100-8220 (JP); Inuzuka, Tatsuki, Hitachi, Ltd. Intell Prop. Group, Chiyoda-ku, Tokyo 100-8220 (JP); Kuzunuki, Soshiro, Hitachi Ltd. Intell Prop. Group, Chiyoda-ku, Tokyo 100-8220 (JP); Nakashima, Keisuke, Hitachi Ltd.Intell Prop. Group, Chiyoda-ku, Tokyo 100-8220 (JP); Fujii, Kenjiro, Hitachi, Ltd. Intell Prop. Group, Chiyoda-ku, Tokyo 100-8220 (JP)
(74) Representative: Beetz & Partner Patentanwälte

(57) **Abstract**

An electronic device capable of displaying and recording an input image includes an image sensor (101, 906, 1006, 1106, 1206, 1306). A position information detector processes the image imaged by the image sensor and calculates movement information of the image sensor itself or movement information of a subject imaged by the image sensor. The electronic device can input hand-written characters and graphics without adding afresh a mouse or a tablet.

## Description

### BACKGROUND OF THE INVENTION

This invention relates to an electronic device applying a camera, such as a digital still camera, a video camera, a PDA, a cellular telephone, an information input device, a robot, an industrial appliance, and so forth.

JP-A-6-296206 describes a portable information device as an electronic device using a camera. This prior art example will be explained below.

Image data from a camera is acquired through an interface. The image data so acquired is outputted to a liquid crystal display part for displaying, and is stored in a data RAM either as such or after being compressed by an image compression/expansion circuit. Memorandum data and address data inputted from a key input are stored in the data RAM. The data thus stored is retrieved and is outputted to the liquid crystal display part for displaying.

Another prior art reference, JP-A-11-345079, describes an example of a hand-held pointing device using an optical sensor IC. This example will be explained next.

Response of the optical sensor IC is digitized and is stored as a frame in a memory. As a distal end portion moves, continuous frames comprising converted patterns of image information are generated, and are compared by auto correlation to determine a moving direction and a moving distance. A contact detector detects contact of a pointer provided to the distal end portion of a hand-held pointing device with a work surface. A button is provided onto a main body of the hand-held pointing device so that it can serve as a mouse of a computer.

### SUMMARY OF THE INVENTION

The first prior art technology described above can display and output the camera image to the liquid crystal display part. To input a hand-written character or graphic, however, an input device such as a mouse or a tablet is necessary, inviting the problem that the electronic device has a large volume and is bulky.

The second prior art technology is directed to a pointing device and cannot display and record the input image.

It is therefore an object of the present invention to provide an electronic device capable of displaying and recording an input image and also capable of inputting a hand-written character or graphic without adding afresh a mouse or a tablet.

To accomplish this object, an electronic device according to the present invention outputs an image taken by an image sensor and processes the image taken by the image sensor so as to calculate movement information of the image sensor.

Alternatively, the electronic device of the present invention outputs the image taken by the image sensor and processes the image taken by the image sensor so as to calculate movement information of a subject of the image sensor.

To materialize a mouse function, the electronic device of the present invention controls a pointing cursor by utilizing the movement information calculated as described above. The electronic device can control click, double-click and drag in the interlocking arrangement with a button, speech or a condition of the image taken.

To materialize a tablet function, the electronic device of the present invention controls a graphic inputting cursor by utilizing the movement information calculated. The electronic device can control pen-up and pen-down in the interlocking arrangement with a button, speech or a condition of the image taken.

The electronic device can further execute character recognition by utilizing the graphic information inputted.

The electronic device can execute signature authentication by utilizing the movement information calculated.

In conjunction with control of robots and industrial appliances, the electronic device can control a manipulator (or servo control) by utilizing the movement information calculated.

A method of calculating the movement information includes the steps of imaging an object article with which absolute coordinates information is associated beforehand, determining the absolute coordinates information, calculating a correspondence point of images taken continuously, extracting a subject of the object article from the images taken continuously, and conducting corresponding point calculation. Features of the subject of the object article may be set in advance.

A method of calculating the corresponding point of the images taken continuously includes the steps of retrieving a partial image near the center of one of the images among the images taken continuously from a greater partial image of other images to conduct correspondence point calculation, and retrieving a partial image of one of the images having large features from a greater partial image of other images to conduct correspondence point calculation.

When conducting corresponding point calculation, calculation can be conducted stably under natural light or illumination of a fluorescent lamp by executing correlation calculation highly resistant to illumination fluctuation such as normalized cross correlation or generalized Hough Transform after extraction of high frequency components.

The moving direction of the image sensor can be correctly reflected when rotation information is determined from continuous images and the movement information is corrected by this rotation information.

The electronic device of the present invention may further include an acceleration sensor, and corrects the movement information in accordance with acceleration information. The electronic device can thus calculate the movement information of the image sensor after its vibration on a moving article is corrected.

A scanning condition of this image sensor may be changed between the case where the image taken by the image sensor is outputted and the case where the movement information is calculated.

### BRIEF DESCRIPTION OF THE DRAWINGS

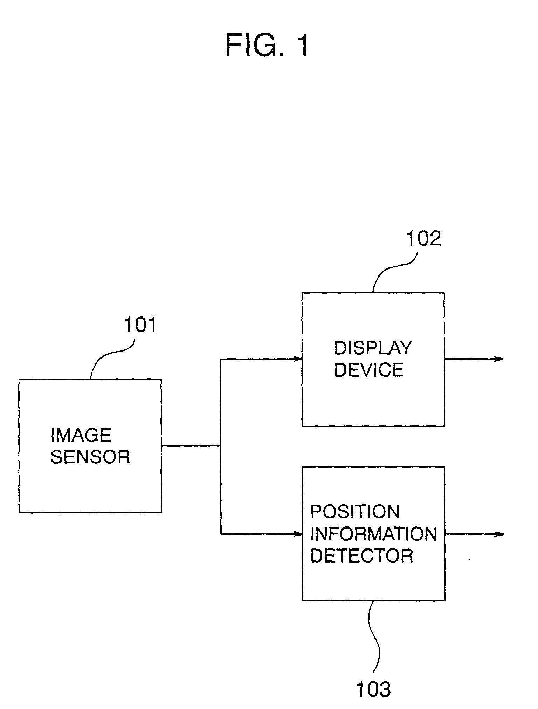

Fig. 1 shows an example of a basic construction of the present invention;
Fig. 2 shows a flowchart of an example of a trace processing part in Fig. 1;
Fig. 3 shows an example of an interface in Fig. 1;
Fig. 4 shows another example of the interface in Fig. 1;
Fig. 5 shows another example of the trace processing part in Fig. 1;
Fig. 6 shows still another example of the trace processing part in Fig. 1;
Fig. 7 shows still another example of the trace processing part in Fig. 1;
Fig. 8 shows still another example of the trace processing part in Fig. 1;
Fig. 9 is a block diagram showing another embodiment of the present invention;
Fig. 10 is a block diagram showing still another embodiment of the present invention;
Fig. 11 is a block diagram showing still another embodiment of the present invention;
Fig. 12 is a block diagram showing still another embodiment of the present invention;
Fig. 13 is a block diagram showing still another embodiment of the present invention;
Fig. 14 is a diagram useful for explaining a controlling method according to the present invention;
Fig. 15 is a diagram useful for explaining control characteristics from a present position to a target position;
Fig. 16 is a block diagram showing a structural example of a feedback control system using screen data;
Fig. 17 is a block diagram showing a structural example of a device for executing control on the basis of registered screen data;

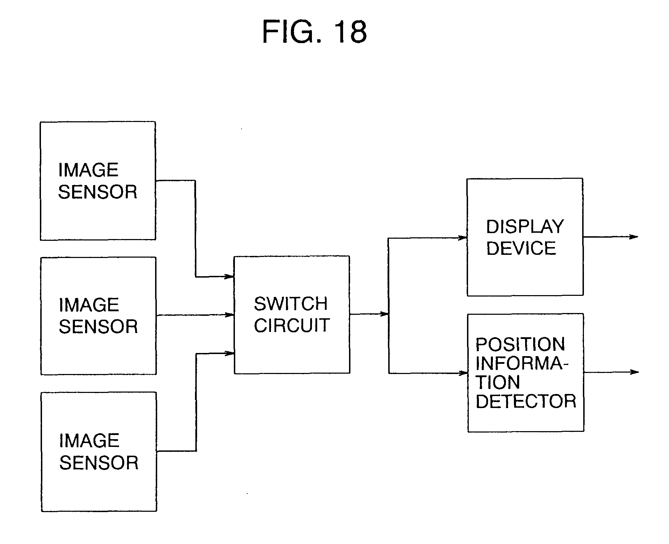

Fig. 18 is block diagram showing a structural example of a device equipped with a plurality of cameras;
Fig. 19 is a block diagram showing a structural example of a feedback control system equipped with a plurality of cameras;
Fig. 20 is a block diagram showing a multi-axial robot arm equipped with an image sensor;
Fig. 21 is a schematic view showing a structural example for enlarging a visual field range of an image sensor;
Fig. 22 is a schematic view showing a mode of use of the present invention;
Fig. 23 is a schematic view showing another mode of use of the present invention;
Fig. 24 is a schematic view showing still another mode of use of the present invention;
Fig. 25 is a schematic view showing still another mode of use of the present invention;
Fig. 26 is a schematic view showing still another mode of use of the present invention;
Fig. 27 is a schematic view showing still another mode of use of the present invention; and
Fig. 28 is a block diagram showing a system in which the present invention is applied to a video camera or a digital camera.
Fig. 29 is a diagram showing one form of a state transition of an electronic device according to the present invention;
Fig. 30 is a schematic view showing one form of a display screen of an electronic device according to the present invention; and
Fig. 31 is a schematic view showing another form of a display screen of an electronic device according to the present invention.

### DETAILED DESCRIPTION OF THE EMBODIMENTS

Hereinafter, preferred embodiments of the present invention will be explained in detail. The basic construction of the present invention includes an image sensor for inputting image data, a display device for displaying the image data inputted from the image sensor and a detector for detecting positional information of an object article from the image data inputted from the image sensor.

It is one of the features of the present invention that one (or one set of) image sensor is used in common for displaying image and detecting positional information. A position of a control object to be grasped visually is associated with information of a position at which the control object exists in practice so that the concrete control object can be controlled on the basis of the instruction given by the visual control. Imaging devices of various types such as CCD, COMS, vacuum tube type, and so forth, can be utilized for the image sensor. A CPU, a personal computer, or the like, can be utilized for the positional information detector. In the description that follows, the position at which the control object is situated will be called "environment". Therefore, it is image data of the environment that the image sensor inputs, and it is image data of the environment that is to be displayed. Control is made for the position of the control object inside the environment.

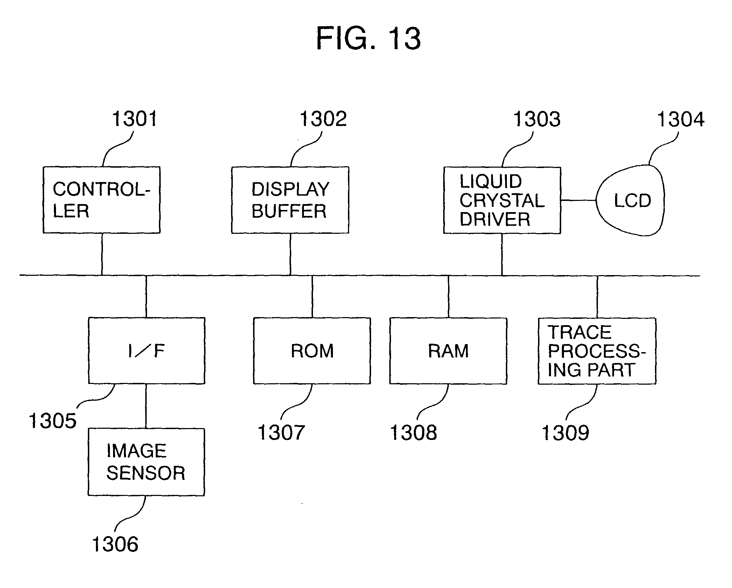

Another embodiment of the present invention will be explained in detail with reference to Fig. 13. Connection among functional blocks shown in this drawing represents logical connection.

An overall operation of this system is executed as a controller 1301 reads and executes a program stored in ROM 1307.

When a mode switch, not shown, sets an operation mode to an image display mode, an image taken by an image sensor 1306 is transferred to a display buffer 1302 through an interface 1305. In this instance, the image may be stored once in RAM 1308 and then transferred. A liquid crystal driver 1303 displays the image inside the display buffer 1302 on a liquid crystal display part 1304.

When the mode switch sets the mode to a movement mode, on the other hand, the image taken by the image sensor 1306 is stored in the RAM 1308 through the interface 1305. A trace processing part 1309 calculates movement information from the continuous images stored.

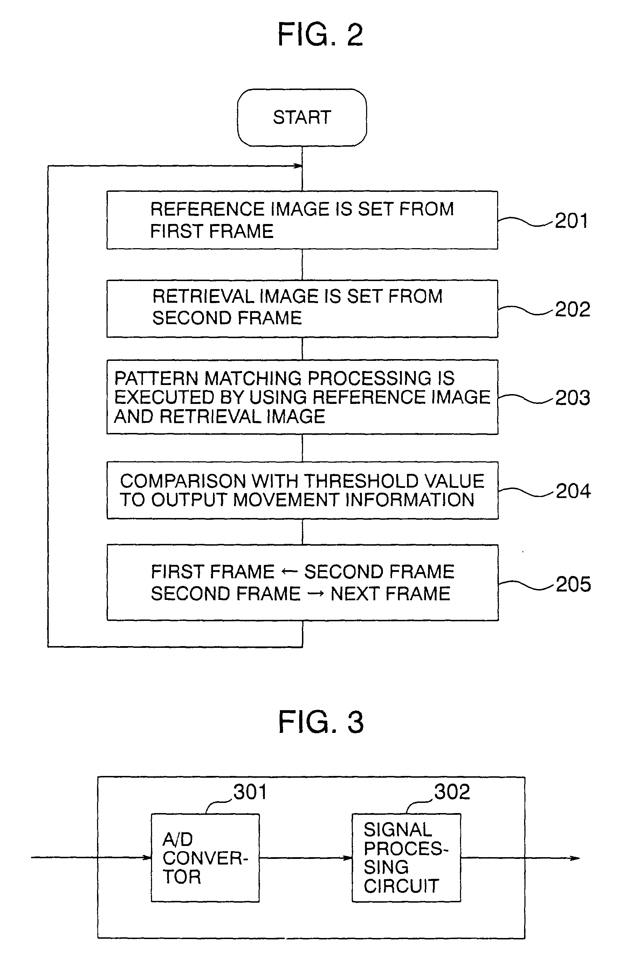

The processing content of the trace processing part 1309 will be explained in detail with reference to Fig. 2. A partial image at the center is used as a reference image from the image of the first frame stored in the RAM 1308 (step 201). To determine at which position this reference image exists in the image of the second frame stored in the RAM 1308, a partial image at the center of the second frame, that is greater than the reference image, is used as a retrieval image (step 202). A pattern matching processing is executed for obtaining the reference image from the retrieval image (step 203).

In this pattern matching processing, similarity is determined between the reference image and each partial image inside the retrieval image, that has the same size as the reference image, in accordance with predetermined similarity calculation. The position of the partial image having the highest similarity is decided. It is possible to use, as this similarity calculation method, a method that calculates the sum of differences between corresponding pixels, and a method that extracts high frequency components from each of the reference and the retrieval image by normalized cross correlation besides cross correlation, and quantitizes the correspondence of the high frequency components by generalized Hough transform.

When similarity to the decided partial image is greater than a predetermined value after the pattern matching process is executed, the positional error or displacement between the reference image and its partial image is outputted as the movement information, and when not, "no displacement" is outputted as the movement information (step 204).

Subsequently, the reference image used for the next pattern matching processing is set similarly from the images of the second frame while the retrieval image is set similarly from the images of the third frame stored in the RAM 1308 (step 205), repeating thereafter the pattern matching processing.

The controller 1301 calculates the movement of a graphic inputting cursor displayed on the liquid crystal display part 1304 by using the movement information calculated as described above and transfers the cursor position to the display buffer 1302. It is assumed hereby that the cursor is displayed at the beginning at a specific position. It is returned to the initial position in accordance with an event such as depression of a specific button.

A pointing cursor may be controlled besides the graphic imputing cursor.

In this embodiment, the reference image in the trace processing part is the image at the center portion of the first frame. However, it is also possible to determine the feature information from the first frame by means such as high frequency component extraction and to use a partial image having a large feature quantity as the reference image.

It is further possible to control pen-up and pen-down and to input an effective graphic by using buttons not shown in the drawings. In this case, pen-down is achieved when the button is pushed and pen-up, when the button is released (or vice versa). A method that switches pen-down and pen-up by means of a toggle may also be used. Control of pen-up and pen-down can also be made depending on a voice level, a vibration level, a degree of obscurity of images, and so forth, besides push/release of the button.

In the case of the pointing cursor, click, double-click and drag can be materialized by using a button, not shown. In this case, click is achieved when the button is pushed once, double click, when the button is pushed twice continuously. Drag is achieved when the cursor is moved while the button is kept pushed. These operations can be further controlled depending on a voice level, a vibration level, a degree of obscurity of images, and so forth.

A hand-written character or graphic can be formed by using the movement information of the graphic inputting cursor in combination of the pen-up/down information. The hand-written character or graphic may be displayed as such on the liquid crystal display part 1304 or may be subjected to a character recognition processing after it is, or is not, displayed. Object characters include Japanese (*kanji, hiragana, katakana*), foreign languages (alphabet, etc), specific characters such as Graffiti, symbols, ciphers, and so forth. These characters may be used for signature authentication after they are, or are not, displayed. In the case of character recognition, they may be subjected to character recognition without using pen-up/down information.

A desired character after character recognition may be selected by using a button, not shown. The desired character may be designated by the graphic inputting cursor (or the pointing cursor) and the pen-down (or click) information.

The attribute of the character or graphic to be displayed may be designated by the graphic inputting cursor (or the pointing cursor) and the pen-down (or click) information.

Fig. 3 shows a structural example of the interface 1305. An A/D converter 301 converts an analog output signal of the image sensor 1306 to a digital signal, and a signal processing circuit 302 executes a specific signal processing. The digital signal may be stored once in a frame memory, not shown in Fig. 3.

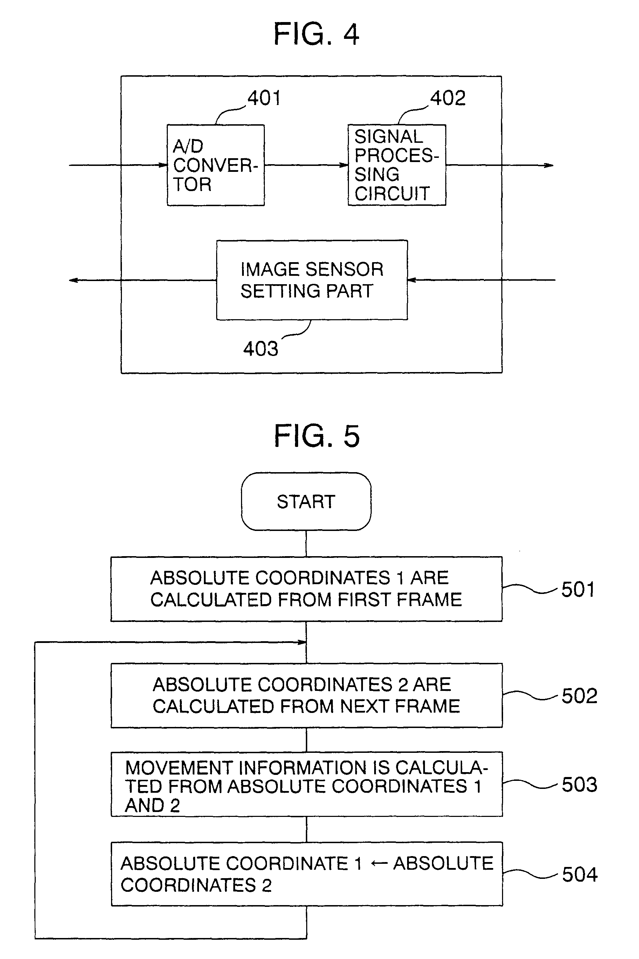

Fig. 4 shows another construction of the interface 1306. The interface 1306 shown in Fig. 4 includes an image sensor setting part 403 in addition to the A/D converter and the signal processing circuit. The image sensor setting part 403 changes the scanning condition (scanning speed, scanning size, etc) of the image sensor in accordance with the image display mode or the movement mode. The image sensor is scanned as a whole at 30 frames/sec in the image display mode, and a part of the image sensor can be scanned at a higher frame rate in the movement mode.

In the embodiment described above, the operator can input the movement information by an operation by one hand. An object article as a subject need not be prepared in advance.

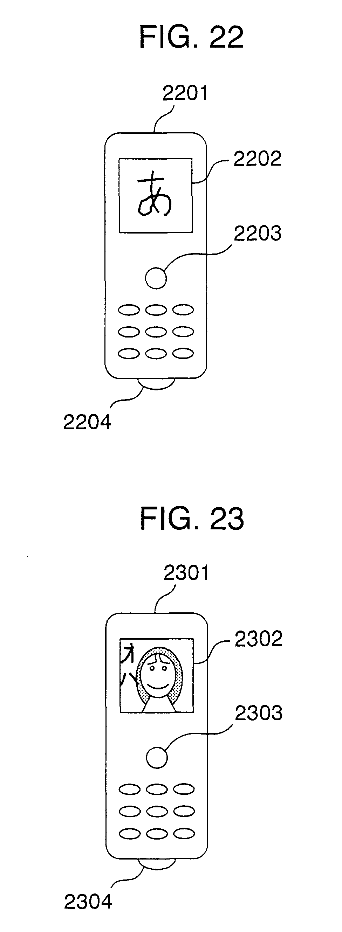

Fig. 22 shows another embodiment of the present invention. An electronic device 2201 includes a liquid crystal display 2202, a camera 2204 and a button 2203. A character is displayed on the liquid crystal display 2202 when the button 2203 is pushed and released while the electronic device 2201 is moved. Alternatively, after the camera 2304 acquires an image, a character is displayed on the image so acquired when the button 2303 is pushed and released while the electronic device is moved, as shown in Fig. 23.

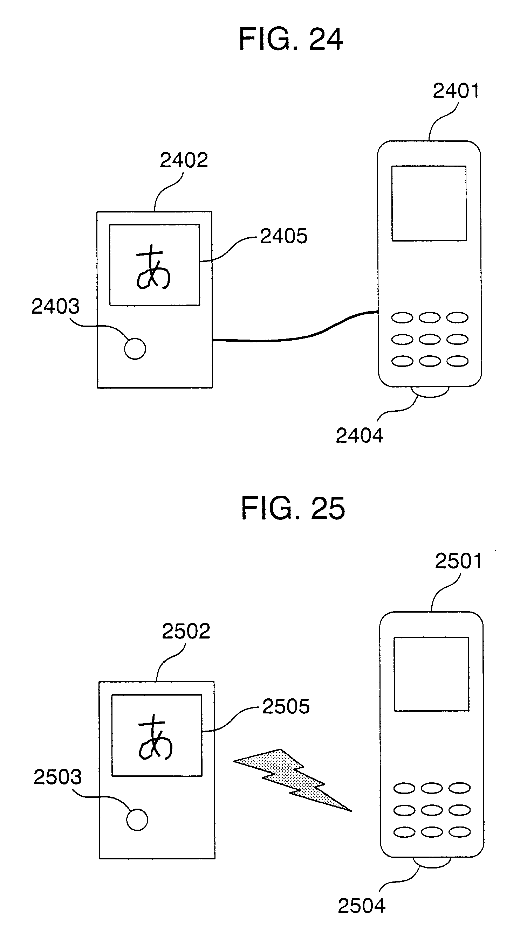

As shown in Fig. 24, there may exist the case where a character is displayed on a liquid crystal display 2405 of a different electronic device 2402 when a button 2403 is pushed and released while the electronic device 2401 is moved. The button 2403 may be disposed on the side of the electronic device 2401 instead of the electronic device 2402. These electronic devices may be connected by a cable as shown in Fig. 24 or by wireless connection as shown in Fig. 25.

In still another embodiment of the present invention, the processing of the trace processing part shown in Fig. 13 may be changed to the processing shown in Fig. 5. In this case, the subject that the image sensor takes must be an article the absolute coordinates of which are associated in advance.

When the mode is set to the image display mode, the electronic device operates in the same way as in the embodiment described above.

When the mode is set to the movement mode, too, the processing that stores the image taken by the image sensor 1306 into the RAM 1308 through the interface 1305 is the same as that of the embodiment described above. The trace processing part calculates the movement information in the same way, but its calculation method is the one shown in Fig. 5 but not of the one shown in Fig. 2. In this point, this embodiment is different.

This embodiment acquires the absolute coordinates information from the image taken.

The association of the absolute coordinates may be an expression by numerical figures such as (100, 50) or an expression by symbols such as uni-dimensional or di-dimensional bar codes.

First, the absolute coordinates of the center of the region taken are determined from the first image by means such as OCR or BCR (step 501). The absolute coordinates of the center are determined similarly from the image taken next (step 502). The movement information is calculated from both of them, and is outputted (step 503). These steps are thereafter repeated.

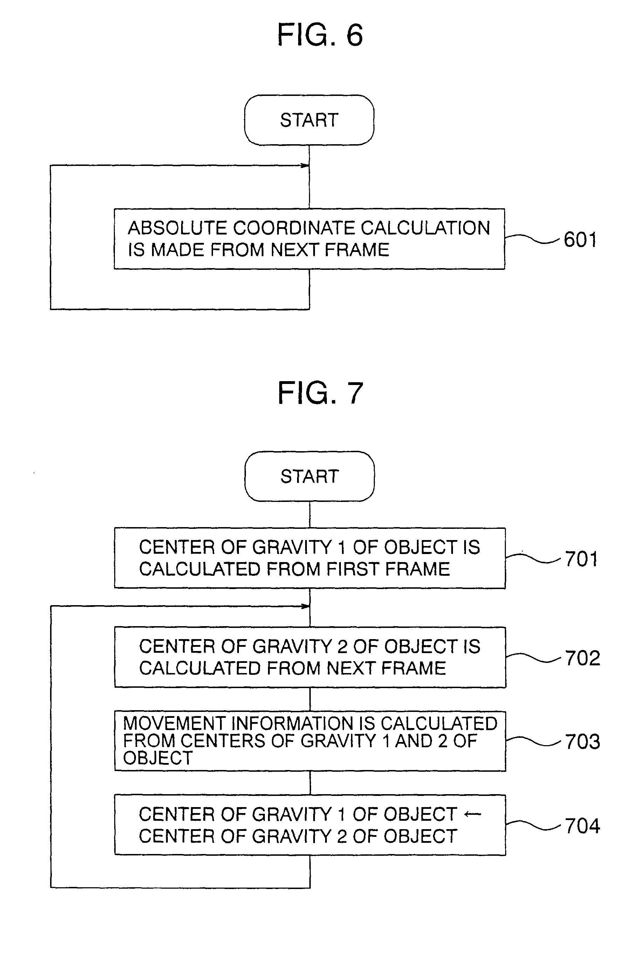

The processing of the trace processing part may be executed for only determining the absolute coordinates of the image taken as shown in Fig. 6. In this case, the controller 1301 calculates the movement information from the absolute coordinates of the continuous images.

In this embodiment, too, the operator can input by one hand the movement information. Since the coordinates information can be determined by one frame, build-up of the errors of the movement information can be eliminated.

In still another embodiment of the present invention, the processing of the trace processing part shown in Fig. 13 is changed to the processing shown in Fig. 5. In the trace processing shown in Fig. 7, an object containing a large number of colors within the color range designated in advance is detected from the images taken by the image sensor (steps 701 and 702), and the center of gravity of the object is outputted.

The controller 1301 calculates the movement information from the centers of gravity of the continuous images.

This embodiment is used when the characters or symbols depicted by a finger or a pen in the air are recognized while the image sensor is kept fixed.

The feature of the object may be the shape instead of the colors. Besides the center of gravity, the center of a circumscribed circle (or rectangle) or inscribed circle (or rectangle) may be used, too.

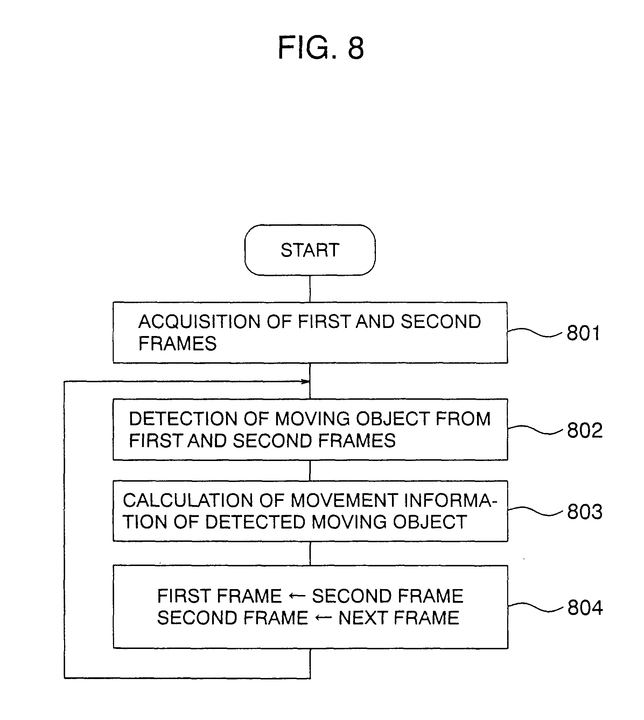

Alternatively, it is possible to detect an object having a large moving distance from the continuous images (step 802) and to output the center of gravity of this object as shown in Fig. 8.

In this embodiment, the electronic device itself can be used in stationary condition. Therefore, the information of the cursor displayed on the screen can be confirmed more easily and conveniently. Since the feature of the object is known in advance, the error in the computation of the movement information can be reduced.

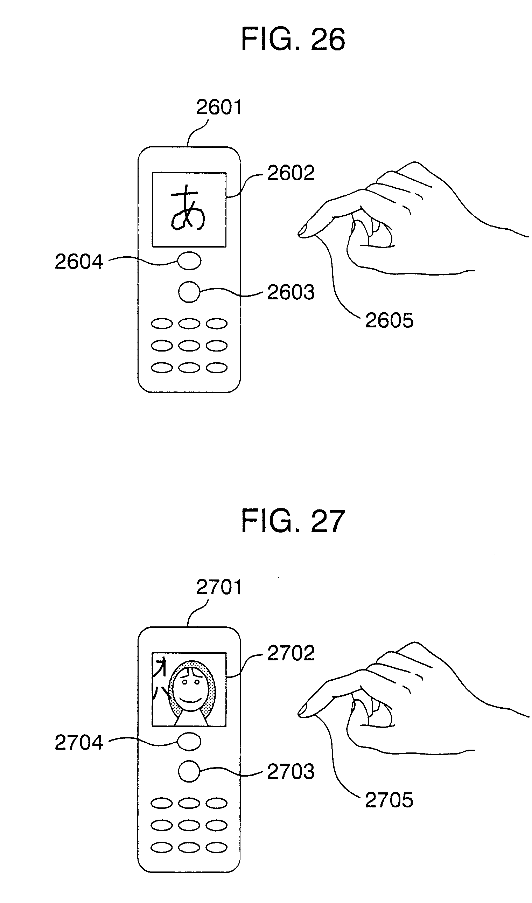

Fig. 26 shows still another embodiment of the present invention. An electronic device 2601 includes a liquid crystal display 2602, a camera 2604 and a button 2603. While the operator grips the electronic device 2601 by fingers of a left hand, for example, the operator pushes and releases the button 2603 by a finger of the right hand to display a character on the liquid crystal display 2602. A specific pattern may be put to the nail of the finger of the right hand. The object may be the one that has a specific color, pattern or shape instead of the finger.

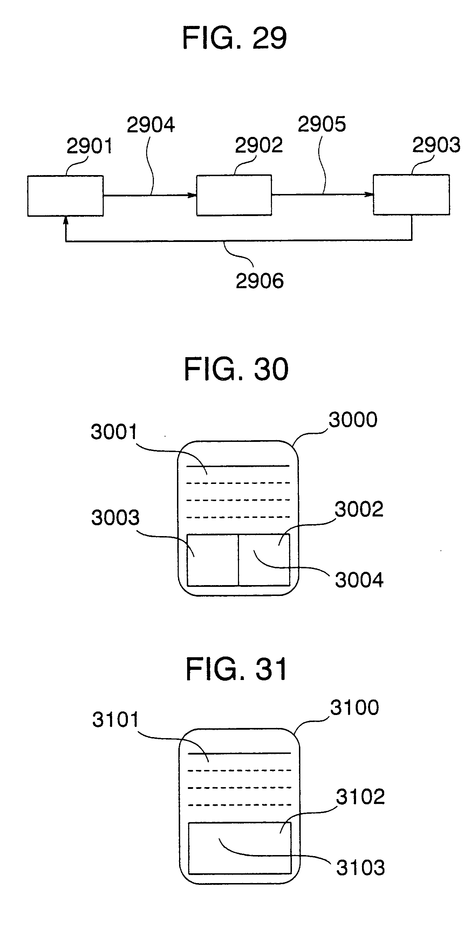

An example of the preparation of E-mail will be explained. Fig. 29 is a state transition diagram of the electronic device when a character/graphic is inputted. A state 2901 represents a state till the starting point of the character/graphic to be inputted by hand writing is defined. A state 2902 represents a state where the hand written character/graphic information is inputted. A state 2903 represents a stand-by state till a suitable applicant is selected from among several applicants of characters/graphics recognized from the hand-written characters.

Transition 2904 from the state 2901 to the state 2902 takes place when the starting point of the character/graphic to be inputted is defined. The starting point is defined by judging the point at which the pen comes to a halt (when the moving distance is below a predetermined time or a specific range) or at which a specific button is pushed, for example.

As the starting point is thus defined, the state shifts to the state 2902, and the operator writes by hand a desired character/graphic. To let the operator know the definition of the starting point, it is possible in the state 2902 to depict the orbit, to change the color or shape of the cursor displayed, to change the color of the whole screen or to change the display of the specific position of the liquid crystal display, though the orbit is not depicted in the state 2901. Alternatively, undesired graphic information may be erased by the push operation of a specific button.

Transition 2905 from the state 2902 to the state 2903 takes place when completion of hand writing input of the desired character/graphic is detected. The detection method of completion of hand writing input may be made by judging the point at which the pen comes to a halt (when the moving distance is below a predetermined time or a specific range), or by judging the movement of the cursor away from the center of gravity of the characters/graphics inputted so far beyond a predetermined distance or the push operation of a specific button, for example. Pen-down/pen-up may be controlled by a specific event when the character/graphic is inputted. In this case, hand written input may be judged as being completed when the pen-up time exceeds a predetermined time or when the pen-up motion is recognized as a specific gesture.

After completion of hand written input is detected, the recognition result of the hand written character/graphic is outputted. When the character/graphic is written by so-called "one stroke writing", one or a plurality of applicants are displayed on the liquid crystal display by using a recognition algorithm corresponding to such one stroke writing.

Transition 2906 from the state 2903 to the state 2901 takes place when any of the applicants displayed as described above is selected as the desired character/graphic. Selection means includes a push operation of a button corresponding to the position of the applicant and representation of an identifier of the corresponding applicant by hand writing. The character/graphic selected in this way is inserted to a predetermined position of the character/graphic series.

Fig. 30 shows a display example of the liquid crystal display of the electronic device according to the present invention. In this drawing, a region 3001 represents a region where the character/graphic series of the mail is displayed. A region 3002 represents a region where the hand written characters/graphics are displayed. A region 3003 represents a region where the applicants are displayed. Reference numeral 3004 denotes the cursor.

Fig. 31 shows another display example of the liquid crystal display of the electronic device according to the present invention. In this example, a region 3101 represents a region where the character/graphic series of the mail is displayed. A region 3102 is a region where the hand written character/graphic or the applicant is displayed. Display of the hand written character/graphic and display of the applicant are isolated time-wise. In other words, the region 3102 is the region for displaying the hand written character/graphic in the state 2901 and the state 2902 shown in Fig. 29 and for displaying the applicant in the state 2903. Reference numeral 3103 denotes the cursor.

The operator can display the character on and in superposition with the image by pushing and releasing the button 2703 while moving the right finger 2705 after the camera 2704 acquires the image as shown in Fig. 27.

Incidentally, the operator can place the electronic device at a suitable position without gripping it by his left hand.

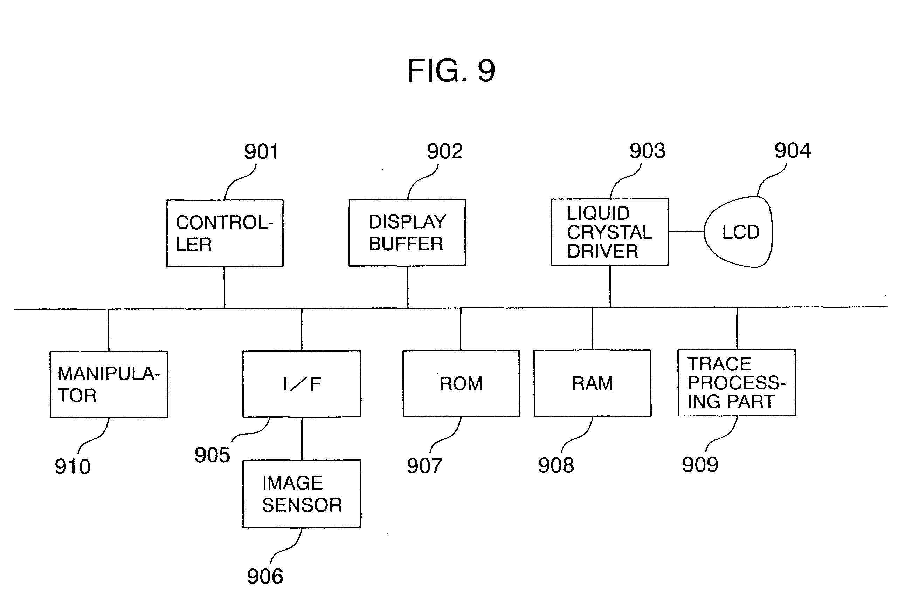

Still another embodiment of the present invention will be explained with reference to Fig. 9. This embodiment controls a manipulator 910 on the basis of the movement information outputted by the trace processing part.

This embodiment can be used in the case where the image sensor is fitted to the distal end of the manipulator to recognize at which part the manipulator manipulates.

A multi-junction robot or a servo may be used in place of the manipulator.

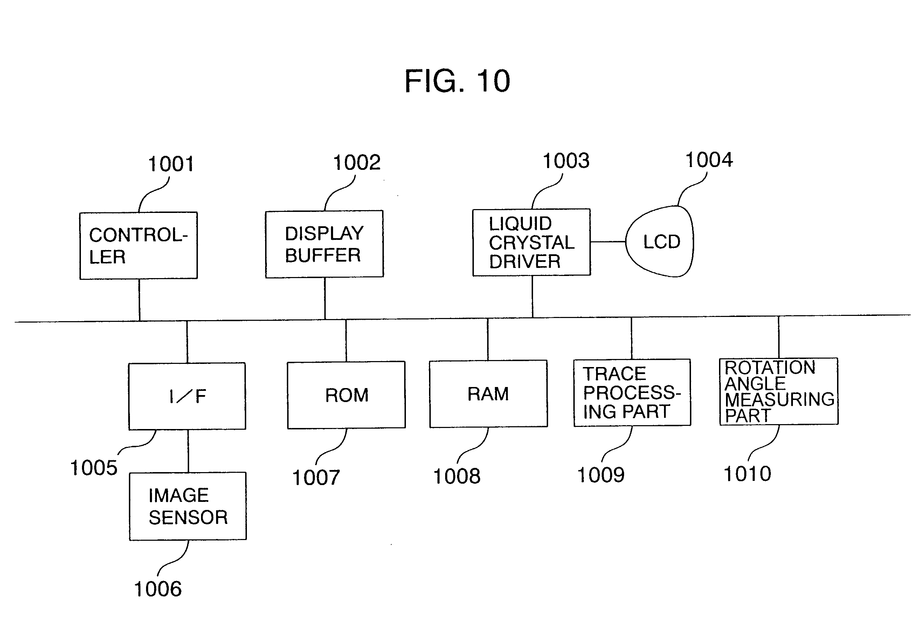

Still another embodiment of the present invention will be explained with reference to Fig. 10. In Fig. 10, a rotation angle measuring part 1010 is disposed in addition to the trace processing part, and measure the angle of rotation of the image sensor in comparison with the initial position (or the previous frame).

When the rotation information is acquired in addition to the movement information calculated by the trace processing part, true movement information (moving direction) is determined.

For example, when the image sensor is calculated as being rotated by x degrees from the initial position, the moving direction corrected by the x degrees to the moving direction calculated by the trace processing part is calculated as a true moving direction. The controller 1001 executes graphic inputting cursor control, pointing cursor control, signature authentication or manipulator control by using the true moving direction. Higher precision recognition or control may be executed by using the rotation information itself in combination.

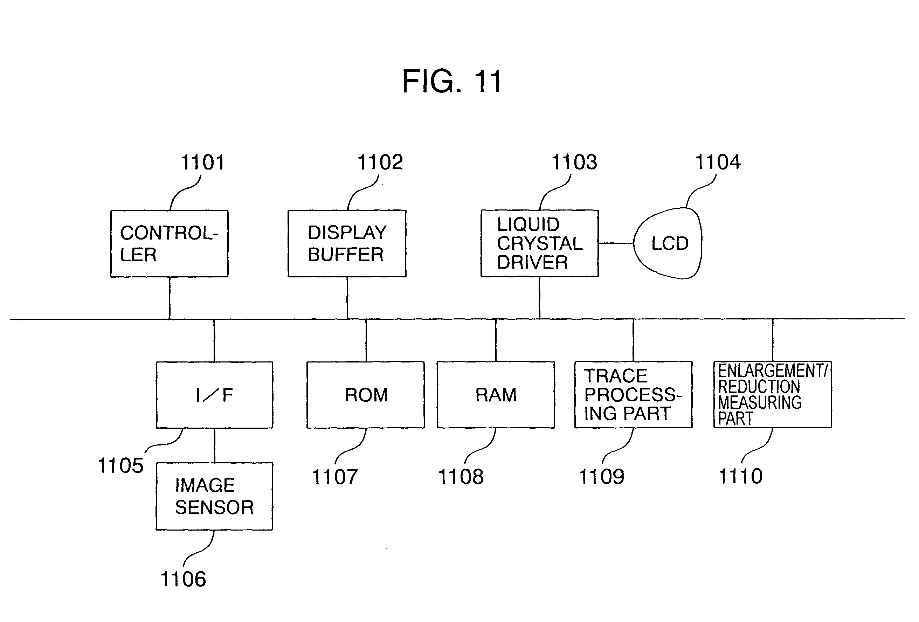

Still another embodiment of the present invention will be explained with reference to Fig. 11. In this embodiment, an enlargement/reduction measuring part 1110 is provided in addition to the trace processing part. The enlargement/reduction measuring part 1110 measures information as to which degree the distance between the image sensor and the subject increases or decreases in comparison with the initial position (or the previous frame). In other words, when the subject is enlarged in comparison with the previous frame, the enlargement/reduction measuring part 1110 recognizes that the distance between the image sensor and the subject becomes smaller, and when the subject is reduced in scale, on the contrary, it recognizes that the distance between the image sensor and the subject increases. The relation between displacement of the distance and the magnification measured by the enlargement/reduction measuring part is measured in advance, and the increase/decrease of the distance is determined by using this relation in combination with the magnification determined by the enlargement/reduction measuring part.

Using the movement information obtained by the trace processing part and the increase/decrease information of the distance between the image sensor and the subject, the controller 1101 executes graphic inputting cursor control, pointing cursor control, signature authentication or manipulator control. To execute graphic inputting cursor control, the controller 1101 calculates the cursor position by the movement information and judgment of pen-up/down by the distance between the image sensor and the subject. In the case of pointing cursor control, the controller 1101 inhibits the cursor from moving in accordance with the distance between the image sensor and the substrate. When executing signature authentication, the controller 1101 can utilize the change information of the distance between the image sensor and the subject, too, as the authentication information. To execute manipulator control, the controller 1101 uses the change information between the image sensor and the subject, recognizes a more detailed position of the image sensor (or the subject) and can thus reflect the position on control.

Recognition and/or control described above may be executed by adding the rotation angle measuring part in the embodiment explained with reference to Fig. 10.

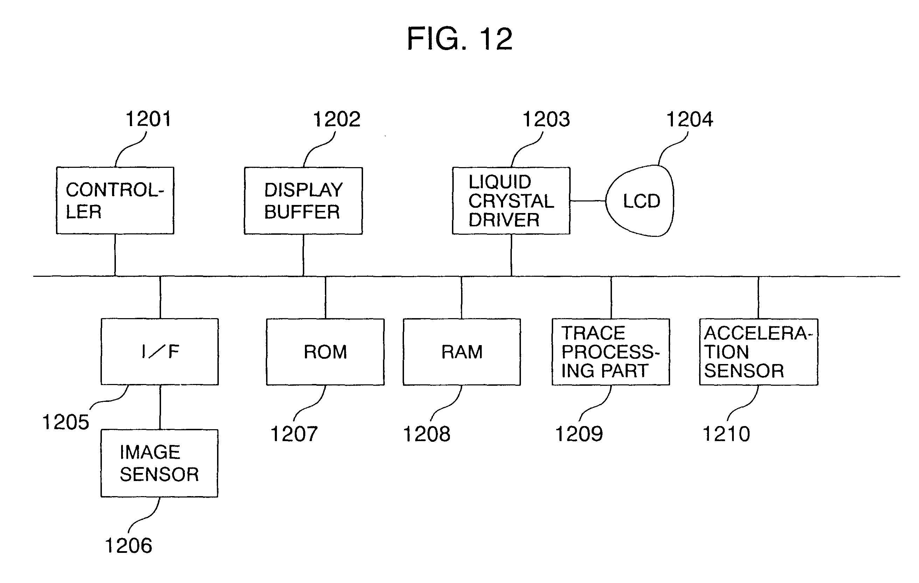

Still another embodiment of the present invention will be explained with reference to Fig. 12. In Fig. 12, an acceleration sensor 1210 is shown disposed in addition to the trace processing part, and measures absolute movement information (with respect to the earth) besides the relative movement information between the image sensor and the subject.

When the electronic device of this embodiment is used on a moving article, influences of vibration of the moving article are determined from the movement information obtained by the trace processing part and the movement information obtained by the acceleration sensor. The measurement result is reflected on the movement information obtained by the trace processing part. In this way, undesired movement information resulting from vibration is omitted.

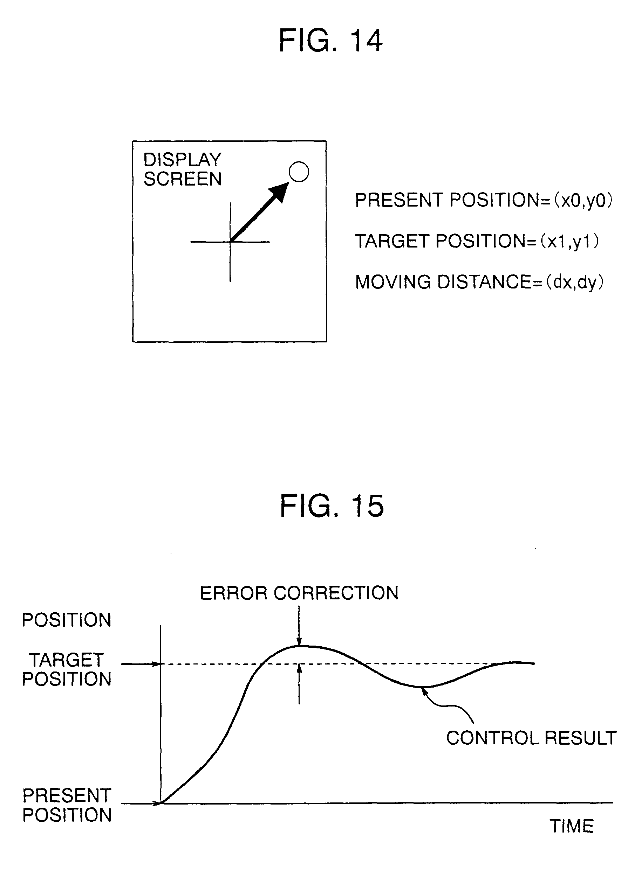

Fig. 14 shows an example of a controlling method in the construction for controlling the relative position between the image sensor and the environment. It will be assumed that a point displayed at present at the center of the screen is the position at which the image sensor is situated. While watching this screen, the operator instructs a target position on the screen from the present position of the image sensor. The content of this instruction is an instruction signal to the electronic device that calculates the difference = (dx, dy) between the present position = (x0, y0) and the target position (x1, y1) as a movement distance (distance and direction) on the basis of the signal detected by the position information detector. A movement vector (direction, moving speed, etc) for the movement to the target position can be utilized, too, as another method of setting the target.

The present invention does not limit the construction equipped with the image sensor, but can be applied, for example, to moving apparatuses having wheels, imaging apparatuses for controlling a direction of the image sensor, robot arms equipped with the image sensor, and so forth. When the control signal based on the instruction described above is supplied to the driving systems of these apparatuses, the relative position with the environment taken by the image sensor can be controlled. When the electronic device is a portable camera, the operator can utilizes the position information while holding it by hand.

Fig. 15 shows control characteristics of these apparatuses from the present position to the target position. Multi-dimensional control is necessary in many cases in practical device constructions, but the most basic unidirectional position control is hereby illustrated. Only two-dimensional image data can be obtained from one image sensor. To execute position control, sensor signals are converted to control signals for a multidimensional driving system. Such signal conversion is often associated by plural equations in a robust device construction without particular problem. Even if any non-linear elements exist, the signals can be converted to the control signals by any approximation processing. To improve quick adaptation and stability of response, a feedback control system can be utilized as is well known in the art. The present invention utilizes the image sensor described above to detect the feedback signal besides setting of the target position.

Here, the target position can be set through instruction from the input device such as a mouse on the screen. It is also possible to utilize the screen data inputted at a target position registered in advance, as the instruction of the target position. This means calculates the moving distance on the screen by executing the matching processing between the image data inputted from the image sensor and the registered image data. The registered screen data is a feature screen in ordinary cases, for example, and can be utilized for judging the existing position in the environment in which the image sensor is situated, and the existence itself.

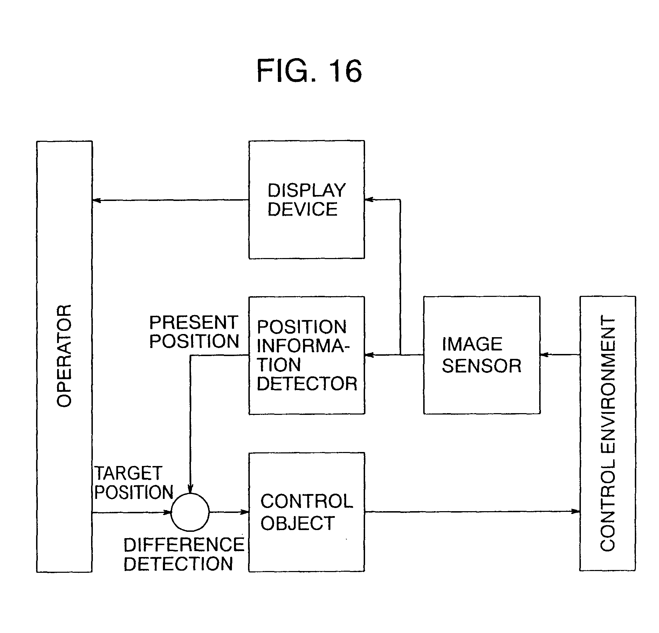

Fig. 16 shows a structural example of a feedback control system using the screen data. The image sensor inputs the environment in which the control object is situated. The image data taken by the image sensor is supplied to the display device for displaying the image for the operator and to the position information detector for the control purpose.

It is the object of the operator to position-control the control object equipped with the image sensor, and to facilitate setting of the target position and to improve quick adaptation and stability. To achieve this object, the present invention provides an interface for the operator to execute position control with reference to the screen and to execute position control by utilizing the position information calculated from the image sensor as the feedback signal. The difference between the present position and the target position is given as the control signal to the control object to control the driving system. When control is made in the control system by using the present position and the target position, it is possible to set in advance the orbit on the way and to calculate in advance the control signals to the driving system. Therefore, quick adaptation and stability of response can be improved.

To set the target position, the operator can utilize and operate a mouse, a tablet or a joystick while watching the screen. The signals set by these input devices are the target position on the screen, the vector information (moving direction, moving speed, etc) for the movement to the target position, and so forth. The mouse and the tablet are suitable for position setting and the joystick is suitable for vector setting. These input devices may be used either alone or in combination. When means for generating a signal capable of coping with the reaction the driving system receives is incorporated in these instruction input devices, the motion can be fed back to the operator.

The present invention does not particularly limit the construction of the feedback loop in the feedback control system. The feedback loop may a single loop utilizing a single control signal for the control object or multiple loops utilizing a plurality of kinds of control signals. It is possible to constitute, for example, a feedback control system that feedbacks in multiple loops the position information calculated from the image sensor in addition to the signal the operator instructs manually. Such a construction can execute the feedback control while following quickly and stably the target position that the operator changes time-wise and sets arbitrarily.

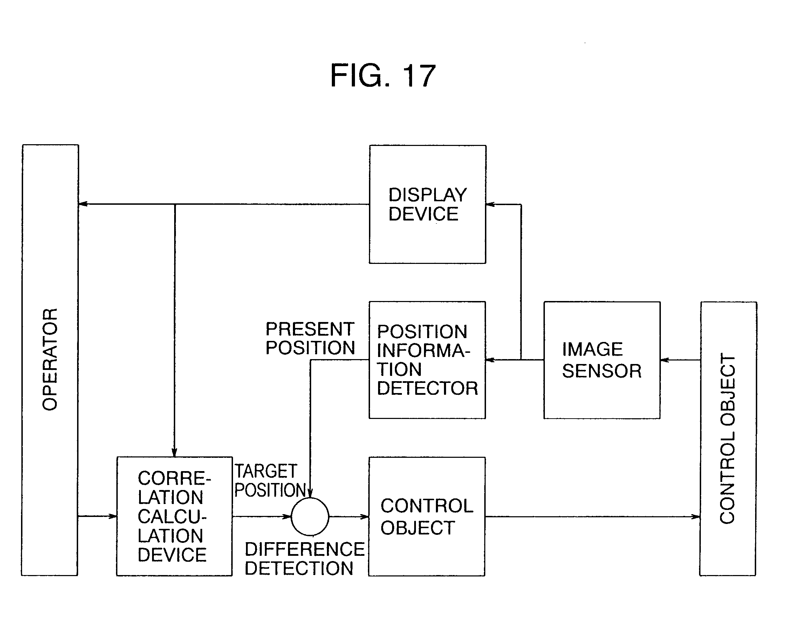

Fig. 17 shows a device construction for executing control on the basis of the image data that is registered in advance. Correlation between the registered screen data and the screen data inputted from the image sensor is calculated and the position having the highest correlation is calculated as the target position. The target position as the calculation result can be utilized not only as the control signal of the control object but also as the signal to be given as the detection result to the operator.

When the range of the visual field of the image sensor is narrow, a retrieving procedure for scanning the angle of view of the sensor within the environment can be added. Speaking more concretely, when the image sensor is allowed to cause swivel motion, the full angle of view can be covered. When correlation providing an applicant of matching is detected during the correlation calculation, means for notifying the operator that the screen position is the applicant, if provided, can improve the operation factor. For example, a spot, a cursor, blinking, etc, can be used to indicate the position of such an applicant position inside the display screen.

Naturally, detection accuracy can be improved when the manual operation by the operator is combined.

The present invention does not limit the number of image sensors. For example, the electronic device may include a plurality of cameras. The merits brought forth are enlargement of the range of the visual field of the image sensor, detection of a three-dimensional position, shortening of the imaging time, shortening of the scanning time inside the environment, and so forth. More concretely, image sensors having a VGA size (640 x 480 pixels) have a size of several millimeters and are generally inexpensive. Therefore, the problem is few in the device construction, and the merits described above are rather greater.

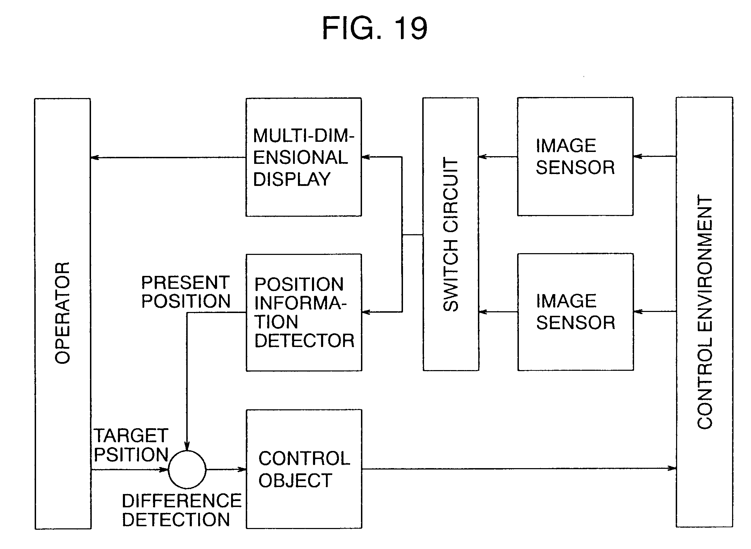

As shown in Fig. 19, for example, the switch circuit switches the inputs from a plurality of image sensors and can simplify the construction of the processing unit. When the electronic device utilizes a digital camera as an image sensor capable of controlling setting of a spatial position by using a plurality of image data from different points of view, distortion of the image occurs due to a lens system. Therefore, the digital still camera is used after such distortion is corrected. Methods of correcting such distortion are not particularly restricted.

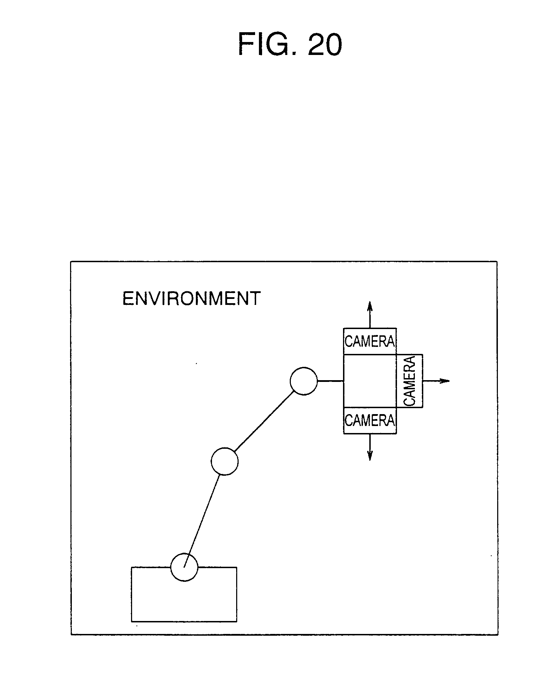

Let's consider a multi-axial robot equipped with an image sensor and capable of moving in the space with great freedom as shown in Fig. 20, for example. In this case, movement to an arbitrary position can be controlled. A rotary encoder, or the like, has been employed in the past to control an angle of rotation. In the present invention, the position information inputted from the image sensor can be utilized. Therefore, control by which the control object reaches the target position can be executed by utilizing the image data. Since the present invention can detect an obstacle in the orbit on the way to the target position, it can assist control of a multiple freedom system.

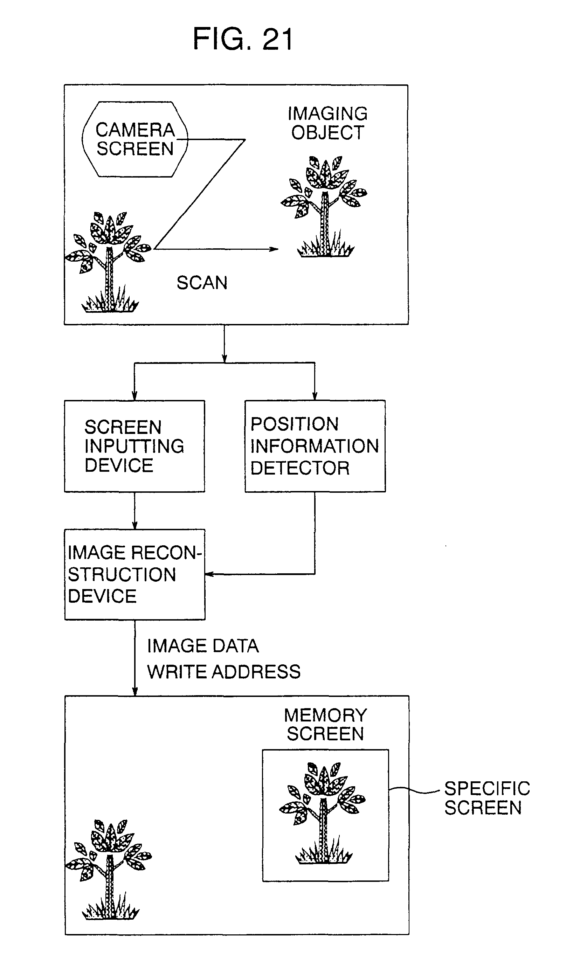

Scanning of the image sensor can be utilized as means for enlarging the range of the visual field of the image sensor. When the range of the visual field is narrow to the environment as shown in Fig. 21, for example, the overall image data can be inputted as the imaging direction is moved. The position information detector described above detects the position of the visual field from the image data thus imputed, and an image reconstruction device synthesizes the input screen. In this way, it becomes possible to generate the image data for the range of the visual field that cannot be inputted by a single image sensor. The result of synthesis can be written into a virtual visual field range (memory screen) prepared on the memory. The operator can read out the image data in the periphery of the target position and display it on the display device.

The target position can also be set while the synthetic screen on the memory is scrolled arbitrarily by using a screen scrolling function, and can generate the control signal of the control object corresponding to the target position.

Incidentally, scanning of the image sensor can be achieved by causing the swivel motion of the sensor itself by using a motor driving system, or the like. Also, an effect equivalent to scanning can be achieved by combining a plurality of image sensors. Correlation calculation with the screen data registered in advance can be executed on the memory screen. Furthermore, detection and display of an applicant position on the overall screen can be executed.

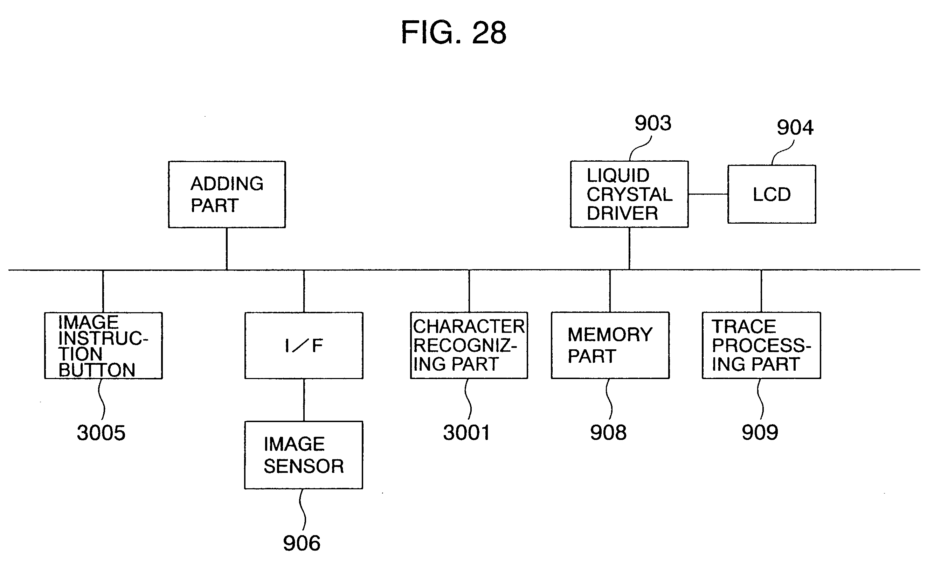

Next, an example where the present invention is applied to a video camera and a digital still camera will be explained with reference to Fig. 28. Fig. 28 shows the overall construction. The image taken by an image sensor is displayed on a displaying part constituted by a liquid crystal driver 903 and an LCD 904. When the scene the user of the video camera or the digital still camera desires to acquire is displayed, the operator pushes an imaging instruction button 3005. Then, the image from the image sensor 906 is stored in a memory part 908. This operation is the same as that of conventional electronic devices. When the operator stops pushing the imaging instruction button 3005, a trace processing part 909 starts operating, traces the image from the image sensor 906 and calculates the coordinates. A character recognizing part 3001 recognizes a character.

In other words, the user first pushes the imaging instruction button at the desired image and then moves the camera. In this way, the operator can input the character as an attribute to the image acquired. An adding part 3002 adds this character attribute to the image and stores it in the memory part 908. When the desired image is retrieved later, the retrieving operation can be made efficiently. Since the alphabet can be inputted by so-called "single-stroke drawing" by using the GRAFFITY character proposed by 3COM Co., U. S. A. for this input character, the recognition processing can be executed easily. When the timing of the character input is limited to only after the image input, the time loss might occur when the images are continuously inputted. Therefore, a character input button is disposed separately, and the image input instruction and the character input can be switched.

Incidentally, the term "environment" is not limited to a stationary rectangular room, but includes an outdoor environment such as a scenery screen, an enclosed environment such as a cave, an amorphous environment that changes time-wise, and so forth.

The present invention can display or record the input image, and can input hand-written characters and graphics without adding anew a mouse or a tablet.

When the image sensor is fitted to the distal end of the manipulator, follow-up performance of the manipulator to the instruction value can be improved when the movement information obtained from the image sensor is fed back to the operation instruction.

## Claims

1. An electronic device having an image sensor (101 906, 1006, 1106, 1206, 1306), comprising:
means (905, 1005, 1105, 1205, 1305) for outputting an image imaged by said image sensor; and
means (103) responsive to said outputting means for calculating movement information of said image sensor by processing the image imaged by said image sensor.

2. An electronic device according to claim 1, wherein the movement information thus calculated is utilized to control a pointing cursor.

3. An electronic device according to claim 1, wherein the movement information thus calculated is utilized to control a graphic inputting cursor.

4. An electronic device according to claim 1, wherein the movement information thus calculated is utilized to execute signature authentication.

5. An electronic device according to claim 1, wherein the movement information thus calculated is utilized to control a manipulator.

6. An electronic device according to claim 2, wherein control of click, double-click and drag is conducted in the interlocking arrangement with a button.

7. An electronic device according to claim 2, wherein control of click, double-click and drag is conducted in the interlocking arrangement with speech.

8. An electronic device according to claim 2, wherein control of click, double-click and drag is conducted in the interlocking arrangement with a condition of the image imaged.

9. An electronic device according to claim 3, wherein control of pen-up and pen-down is conducted in the interlocking arrangement with a button.

10. An electronic device according to claim 3, wherein control of pen-up and pen-down is conducted in the interlocking arrangement with speech.

11. An electronic device according to claim 3, wherein control of pen-up and pen-down is conducted in the interlocking arrangement with a condition of the image imaged.

12. An electronic device according to claim 3, wherein character recognition is conducted by utilizing graphic information inputted.

13. An electronic device according to claim 1, wherein the movement information is calculated by imaging an object article associated in advance with absolute coordinates information, and determining said absolute coordinates information.

14. An electronic device according to claim 1, wherein the movement information is calculated by calculating correspondence points of the images continuously imaged.

15. An electronic device according to claim 14, wherein the correspondence point is calculated by retrieving a partial image near the center of one image among the images continuously imaged, from a greater partial image of other images.

16. An electronic device according to claim 14, wherein the correspondence point is calculated by retrieving a partial image, having large features, of one image among the images continuously imaged, from a greater partial image of other images.

17. An electronic device according to claim 14, wherein the correspondence point is calculated by correlation calculation highly resistant to illumination fluctuation.

18. An electronic device according to claim 17, wherein normalization mutual correlation is executed as the correlation calculation highly resistant to illumination fluctuation.

19. An electronic device according to claim 17, wherein generalized Hough transform is executed after extraction of high frequency components as the correlation calculation highly resistant to illumination fluctuation.

20. An electronic device according to claim 14, wherein the movement information is corrected in accordance with rotation information of the image determined (1010).

21. An electronic device according to claim 1, further comprising an acceleration sensor (1210), and the movement information being corrected in accordance with the information outputted from said acceleration sensor.

22. An electronic device according to claim 1, wherein a scanning condition of said image sensor is changed between the point at which the image imaged by said image sensor is outputted and the point at which the movement information is calculated.

23. An electronic device according to claim 22, wherein a scanning condition of said image sensor is a scanning speed.

24. An electronic device according to claim 22, wherein a scanning condition of said image sensor is a scanning region.

25. An electronic device according to claim 1, wherein the movement information of said electronic device is calculated by moving a main body of said electronic device.

26. An electronic device having an image sensor (101, 906, 1006, 1106, 1206, 1306) comprising:
means (905, 1005, 1105, 1205, 1305) for outputting an image imaged by said image sensor; and
means (1009, 1109, 1209, 1309) responsive to said outputting means for processing the image imaged by said image sensor, and calculating movement information of a subject of said image sensor.

27. An electronic device according to claim 26, wherein the movement information thus calculated is utilized to control a pointing cursor.

28. An electronic device according to claim 26, wherein the movement information thus calculated is utilized to control a graphic inputting cursor.

29. An electronic device according to claim 26, wherein the movement information thus calculated is utilized to execute signature authentication.

30. An electronic device according to claim 26, wherein the movement information thus calculated is utilized to control a manipulator.

31. An electronic device according to claim 27, wherein control of click, double-click and drag is conducted in the interlocking arrangement with a button.

32. An electronic device according to claim 27, wherein control of click, double-click and drag is conducted in the interlocking arrangement with speech.

33. An electronic device according to claim 27, wherein control of click, double-click and drag is conducted in the interlocking arrangement with a condition of the image imaged.

34. An electronic device according to claim 28, wherein control of pen-up and pen-down is conducted in the interlocking arrangement with a button.

35. An electronic device according to claim 28, wherein control of pen-up and pen-down is conducted in the interlocking arrangement with speech.

36. An electronic device according to claim 28, wherein control of pen-up and pen-down is conducted in the interlocking arrangement with a condition of the image imaged.

37. An electronic device according to claim 28, wherein character recognition is conducted by utilizing graphic information inputted.

38. An electronic device according to claim 26, wherein the movement information is calculated by extracting a subject of an object from images imaged continuously, and conducting correspondence point calculation for the subject so extracted.

39. An electronic device according to claim 26, wherein features of a'subject of an object are set in advance.

40. An electronic device according to claim 26, wherein a scanning condition of said image sensor is changed between the point at which an image imaged by said image sensor is outputted and the point at which the movement information is calculated.

41. An electronic device according to claim 40, wherein a scanning condition of said image sensor is a scanning speed.

42. An electronic device according to claim 40, wherein a scanning condition of said image sensor is a scanning region.

43. An electronic device according to claim 26, wherein movement information of a third object article is calculated by moving said third object article inside a visual field of said image sensor.

44. An electronic device comprising:
an image sensor (101, 906, 1006, 1106, 1206, 1306);
a displaying part (102, 904, 1004, 1104, 1204, 1304) for displaying an image imaged by said image sensor; and
means (3001) for executing character recognition from movement information of the image imaged by said image sensor, and adding the recognition result as an attribute to the image thus imaged.

45. An electronic device according to claim 44, wherein a symbol representing an alphanumeric character is used as said attribute.

46. An electronic device according to claim 45, wherein a GRAFFITY character is used as said symbol representing an alphanumeric character of one character as the attribute.

47. An electronic device according to claim 44, further comprising a button for switching a mode for imaging an image and a mode for inputting a symbol.

48. An electronic device according to claim 47, further comprising:
a button for instructing imaging of an image; and
means for switching an operation mode to a mode for inputting a symbol for a predetermined time when said button for instructing the image input is released.
